(19) Europäisches Patentamt
European Patent Office
Office européen des brevets

(11) Numéro de publication: **0 202 176**
**B1**

(12) # FASCICULE DE BREVET EUROPEEN

(45) Date de publication du fascicule du brevet: **20.06.90**

(51) Int. Cl.[5]: **C 08 G 77/62,** C 08 L 83/16

(21) Numéro de dépôt: **86420113.2**

(22) Date de dépôt: **30.04.86**

(54) **Procédé de traitement de polyorganosilazanes et/ou de polyorgano(disilyl)silazanes par un système catalytique comprenant un sel minéral ionique et un composé complexant.**

(30) Priorité: **06.05.85 FR 8506828**

(43) Date de publication de la demande:
**20.11.86 Bulletin 86/47**

(45) Mention de la délivrance du brevet:
**20.06.90 Bulletin 90/25**

(84) Etats contractants désignés:
**AT BE CH DE FR GB IT LI LU NL SE**

(56) Documents cités:
**FR-A-1 331 392**
**US-A-3 007 886**
**US-A-3 143 514**
**US-A-3 187 030**
**US-A-4 482 669**

**CHEMICAL ABSTRACTS, vol. 69, no. 24, page 9130, résumé no. 97256y, Columbus, Ohio, US; K.A. ANDRIANOV et al.: "Ammonolysis of 1,4-bis(dimetylchlorosilyl)benzene", & KHIM. GETEROTSIKL. SOEDIN. 1968, (3), 554-6**

**Le dossier contient des informations techniques présentées postérieurement au dépôt de la demande et ne figurant pas dans le présent fascicule.**

(73) Titulaire: **RHONE-POULENC CHIMIE**
**25, quai Paul Doumer**
**F-92408 Courbevoie Cédex (FR)**

(72) Inventeur: **Porte, Hugues**
**65, rue de Sèze**
**F-69006 Lyon (FR)**
Inventeur: **Lebrun, Jean-Jacques**
**24, rue Pierre Brunier**
**F-69300 Caluire-et-Cuire (FR)**

(74) Mandataire: **Seugnet, Jean Louis et al**
**RHONE-POULENC CHIMIE Service Brevets Chimie Centre de Recherches des Carrières B.P. 62**
**F-69192 Saint-Fons Cédex (FR)**

**EP 0 202 176 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

## Description

La présente invention concerne un procédé de traitement de polyorganosilazanes et/ou de polyorgano(disilyl)silazanes par un système catalytique comprenant un sel minéral ionique et un composé complexant.

Les organopolysilazanes dénommés par la suite polysilazanes sont des produits bien connus se présentant sous forme de monomères, d'oligomères et de polymères cycliques ou linéaires et également sous la forme de polymères résineux. Ces polysilazanes peuvent être préparés suivant une large variété de procédés à partir d'une gamme étendue de produits de départ.

Ces polysilazanes peuvent être notamment mis en forme et être pyrolysés sous forme de $Si_3N_4$, SiC ou leurs mélanges. Pour fabriquer du nitrure de silicium, il existe une autre voie qui consiste à faire réagir à haute température et en phase vapeur des chlorosilanes ($SiCl_4$, $HSiCl_3$ et $H_2SiCl_2$) sur l'ammoniac. Selon cette méthode aboutissant directement à un produit en poudre, il est difficile de fabriquer des objets en forme, en particulier, de fibres. Par contre, les polysilazanes peuvent être filés en fibres continues dont la pyrolyse aboutit à des fibres céramiques.

Ils peuvent être mis sous forme de pellicules plus ou moins minces, de pièces massives moulées, et être utilisés comme liant pour fibre céramique ou fibre de carbone et comme liant de frittage pour pièces céramiques poreuses.

Il existe toutefois des difficultés pour mettre en forme de façon aisée et économique ces polysilazanes sous forme de fibres ou de revêtements qui, après pyrolyse, donnent des produits céramiques sous forme de fibre, de pellicules, de revêtements plus ou moins minces et de pièces moulées.

Dans le brevet américain US.A 3.853.567 on a essayé de donner une première solution au problème ci-dessus.

Selon ce brevet on propose un procédé de fabrication de pièces en forme telles que des fibres comportant du carbure de silicium, du nitrure de silicium ou leurs mélanges avec d'autres produits céramiques, en effectuant un premier traitement thermique à une température comprise entre 200°C et 800°C d'un polysilazane, en vue d'obtenir une résine carbosilazane fusible qui peut être filée à l'état fondu puis pyrolysée à une température comprise entre 800 et 2000°C.

Le brevet ci-dessus constitue certes un progrès important mais il présente le double inconvénient de nécessiter un premier traitement thermique à une température pouvant être déjà très élevée (200—800°C) et de travailler un carbosilazane à l'état fondu sous des conditions anhydres et en atmosphère inerte. De plus, le rendement pondéral en céramique peut être insuffisant.

Dans le demande de brevet japonais kokai n° 79/93 100, on décrit un procédé de polymérisation d'organopolysilazanes de haut poids moléculaire en utilisant comme catalyseur de traitement des organopolysilazanes, des terres acides. Ce procédé présente cependant l'inconvénient majeur de nécessiter la séparation du catalyseur solide par filtration impliquant l'emploi de solvant dans le cas de polymères atteignant des viscosité élevées.

La référence du Chemical Abstracts, vol. 69, n° 24, 1968, page 9 130, n° 97 265 Y résume une publication sur un procédé de polymérisation de polysilazane en présence de faibles quantités de chlorure d'ammonium sans préciser lesquelles, $NH_4Cl$ pouvant être tout simplement un reliquat du sous-produit, de l'ammonolyse. De plus ce document ne décrit, ni ne suggère l'addition concomittante d'agents séquestrants.

US—A—3 187 030 décrit un procédé de polymérisation de polysilazane en présence 0,01 à 10% en poids de sels minéraux ioniques, mais les quantités utilisées dans les exemples sont de l'ordre de 1%. De plus ce document ne décrit, ni ne suggère l'addition concomittante d'agents séquestrants.

La présente invention a pour but de résoudre le problème ci-dessus et de proposer un moyen simple, efficace, économique et de mise en oeuvre aisée pour préparer sous des formes les plus diverses (fils, articles, moulés, revêtements, pellicules etc . . .) des polysilazanes qui, lors de leur pyrolyse, à une température comprise entre 1000 et 2000°C donnent des produits céramiques présentant d'excellentes propriétés.

Il est en outre souhaitable et c'est un autre but de la présente invention de pouvoir disposer facilement d'um polysilazane qui soit assez stable à l'hydrolyse et qui conduise par pyrolyse avec un rendement pondéral élevé, à un matériau céramique. Il est nécessaire pour cela que le polysilazane présente lors de la pyrolyse une bonne tenue thermique tout en demeurant solidaire du support à revêtir et à imprégner.

Ces buts et d'autres sont atteints par la présente invention qui concerne en effet un procédé de traitement d'un polysilazane, caractérisé en ce qu'on traite catalytiquement au moins un polysilazane exept d'atome d'hydrogène lié directement aux atomes de silicium choisi parmi un organopolysilazane et un organopoly(disilyl)silazane et leurs mélange dans lesquels les radicaux organiques liés aux atomes de silicium sont des radicaux hydrocarbonés en présence d'une quantité catalytiquement efficace d'un système catalytique comprenant un sel minéral ionique de formule $M^+A^-$ et un composé complexant le cation $M^+$ dudit sel. Comme organopolysilazane on peut utiliser n'importe quel produit de réaction (a) d'au moins un oranohalogénosilane de formule:

$$R_aX_{4-a}Si \qquad (I)$$

dans laquelle les radicaux R identiques ou différents sont choisis parmi un radical alkyle, linéaire ou ramifié

éventuellement halogéné ayant de 1 à 12 atomes de carbone, un radical cycloalkyle ayant de 5 à 7 atomes de carbone et un radical aryle tel que le radical phényle et naphtyle, un radical arylalkyle ou alkylaryle dont la partie alkyle linéaire ou ramifiée comporte de 1 à 6 atomes de carbone, les radicaux R étant différents de l'atome d'hydrogène et a étant 0, 1, 2 ou 3, sur

(b) un composé organique ou organosilylé comportant au moins un groupement $NH_2$ ou NH comme par exemple l'ammoniac, les amines primaires ou secondaire, les silylamines, les amides, les hydrazines, les hydrazides, etc . . .

Dans la formule (I), comme exemples de radicaux R alkyle, on peut citer les radicaux méthyle, éthyle, propyle, butyle, pentyle, hexyle, heptyle et octyle; R cycloalkyle: on peut citer les radicaux cyclopentyle, cyclohexyle et cycloheptyle; R arylalkyle, les radicaux benzyle, phényléthyle: R alkylaryle, les radicaux tolyle et xylyle, R alcényle, les radicaux vinyle et allyle, R alcynylé, les radicaux éthynyle et propynyle. X est un halogène qui est généralement l'atome de chlore.

Comme organohalogénosilane utilisable seul ou en mélange on peut citer:

$(CH_3)_2$ Si $Cl_2$, $(CH_3)_3$ SiCl, $CH_3SiCl_3$, $SiCl_4$

$(CH_3)_2$ $Si(CH_2Cl_2)$, $(CH_3)_3$ $SiCH_2$ Cl, $CH_3$ $Si(CH_2$ $Cl)_3$

$(C_6H_5)_2$ $SiCl_2$, $(C_6H_5)(CH_3)$Si $Cl_2$, $C_6$ $H_6$ $SiCl_3$

$(CH_3)(CH_3CH_2)$Si $Cl_2$ $(CH_3)(CH_2 = CH)$ $SiCl_2$,

$(CH_3)_2(CH_2 = CH)$ SiCl, $(C_6H_5)_2$ $(CH_2 = CH)$SiCl

$(C_6H_5)(CH_2 = CH)$ $SiCl_2$, $CH_3(C_6H_5)(CH_2{=}CH)$SiCl.

Ces polysilazanes sont bien connus et aisés à préparer. Ils englobent plus spécifiquement:

les polymères linéaires répondant aux formules:

$$H_2N\ (R_2SiNH)_p\ SiR_2\ NH_2 \quad \text{(II)}$$

et

$$R_3SiNH(R_2\ SiNH)R_{p'}\ SiR_3 \quad \text{(III)}$$

dans lesquels R a la signification ci-dessus; p et p' sont des nombres entiers pouvant être compris entre 1 et 1000 généralement entre 3 et 300.

Les polymères de formule (II) peuvent être préparés par mise en contact de diorganodichlorosilanes avec de l'ammoniac, et ceux de formule (III) par réaction d'ammoniac sur un triorganochlorosilane ou un mélange de diorganodichlorosilane et de triorganochlorosilane (voir brevet français FR—A. 1.086.932, brevet américain US—A. 2.564.674).

De façon générale, la réaction d'organohalogénosilane sur une organoamine est décrite dans les brevets américains US—A. 3.853.567 et 3.892.583 et la réaction d'organohalogénosilane sur un disilizane est décrite dans le brevet belge BE—A. 888.787.

les polymères cycliques répondant à la formule:

$$(R_2SiNH)_n \quad \text{(IV)}$$

dans laquelle n est compris entre 3 et 10, généralement n = 3,4 et R a la signification donnée pour la formule (I) ci-dessus. Ils sont décrits notamment dans le brevet britannique GB—A. 881.178.

les polymères résineux formés de motifs choisis parmi ceux de formule $R_3$ $SiNH_{0,5}$, $R_2$ SiNH, $RSiNH_{1,5}$, $Si(NH)_2$.

Ils sont avantageusement préparés par mise en contact des organochlorosilanes correspondant ou des mélanges de ces silanes, avec de l'ammoniac, de préférence en milieu solvant organique (voir brevets français FR—A. 1.379.243, FR—A. 1.392.853 et FR—A.1.393.728).

Ces polymères résineux renferment en quantité prépondérante des liaisons Si—NH—Si et en quantité moindre des liaisons $SiNH_2$ et comportant parfois en dehors des polymères réticulés, des polymères linéaires et cycliques; ces derniers ne pouvant se former que si, parmi les organochlorosilanes de départ se trouvent des diorganodichlorosilanes.

Les organopoly(disilyl)silazanes peuvent être préparés par action (a) d'un composé organique ou organosilylé comportant au moins un groupement $NH_2$ ou NH comme par exemple l'ammoniac, les amines primaires ou secondaires, les silylamines, les amides, les hydrazines et les hydrazides, etc . . . sur (b) au moins un organohalogénodisilane de formule:

$$R_b\ X_{3-b}\ Si\ Si\ R_c\ X_{3-c} \quad \text{(V)}$$

dans laquelle les radicaux R identiques ou différents ont la même signification que ci-dessus et b est égal à 0,1, 2 ou 3 et c est égal à 0, 1 ou 2 et X est un halogène, généralement le chlore.

Comme exemple de composés de formule (V) on peut citer:

$$(CH_3)_2\ ClSiSi\ (CH_3)_2\ Cl,\ (CH_3)_2Cl\ SiSi\ CH_3\ Cl_2$$

$$CH_3\ Cl_2\ SiSi\ CH_3\ Cl_2$$

Comme exemples de composés comportant au moins un groupement $NH_2$ ou NH et utilisable pour la synthèse des polysilazanes ci-dessus, on peut citer : l'ammoniac, la méthylamine, la diméthylamine,

l'éthylamine, la cyclopropylamine, l'hydrazione, la méthylhydrazine, l'éthylènediamine, la tétraméthylènediamine, l'hexaméthylènediamine, l'aniline, la méthylaniline, la diphénylamine,, la toluidine, la guanidine, l'aminoguanidine, l'urée, l'hexaméthyldisilazane, le diphényltétraméthyldisilazane; le tétraphényldiméthyldisilazane, le tétraméthydivinyldisilazane, le diméthyldiphényldivinyldisilazane et le tétraméthyldisilazane.

La réaction d'halogénodisilane, en présence éventuellement d'halogenosilane, sur l'ammoniac est décrite dans le brevet européen EP—A 75826. a réaction d'halogénodisilane sur un disilazane est décrite dans le brevet français FR—A 2.497.812. Tous les documents ci-dessus de préparation de polysilazanes sont cités comme référence.

Comme décrit dans le brevet EP—A.75826, il est possible de préparer des organopoly [(disilyl) silazanes-silazanes] par réaction de dérivés aminés cités précédemment sur des mélanges de produits halogénés de formule (I) et (V) ci-dessus.

Les polysilazanes de départ préparés à partir d'ammoniac sont généralement appelés ammonolysats et les polysilazanes de départ préparés à partir d'un composé aminé comme indiqué ci-dessus sont appelés aminolysats qui incluent donc les ammonolysats.

Par ailleurs, dans les aminolysats, du type polysilazane, on distingue les motifs:

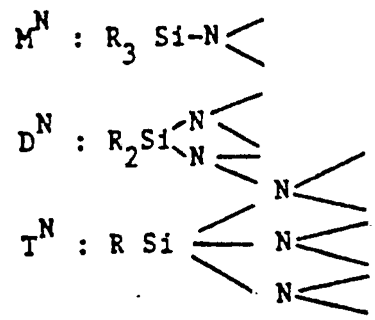

Les sels minéraux ioniques de formule $M^+A^-$ mis en oeuvre selon l'invention sont notamment choisis parmi ceux dans lesquels $M^+$ représente un alcalin, un alcalino-terreux ou un ammonium quarternaire et de préférence: $Li^+$, $Na^+$, $K^+$, $Ca^{++}$, $NH_4^+$ et ceux dans lesquels $A^-$ représente un halogène, $SCN^-$, $CN^-$, $CO_3^{--}$ et de préférence: $F^-$, $Cl^-$, $Br^-$, $I^-$.

Selon un premier mode de mise en oeuvre particulier de l'invention, le composé complexant le cation du sel minéral ionique est un agent séquestrant de formule:

$$N—[CHR_1—CHR_2—O—(CHR_3—CHR_4—O)_n—R_5]_3 \qquad (VI)$$

dans laquelle n est un nombre entier supérieure ou égal à 0 et inférieur à inclus; $R_1$, $R_2$, $R_3$ et $R_4$ identiques ou différents sont choisis parmi un atome d'hydrogène et un radical alkyle en $C_1—C_4$ et les radicaux $R_5$, identiques ou différents, sont choisis parmi un atome d'hydrogène, un radical alkyle ou cycloalkyle en $C_1—C_{12}$, un radical alkylphényle ou phénylalkyle dont la partie alkyle est en $C_1—C_{12}$.

De préférence $R_1$, $R_2$, $R_3$ et $R_4$ représentent un atome d'hydrogène ou un radical méthyle et au moins un des radicaux $R_5$ représente l'atome d'hydrogène ou à défaut un radical alkyle en $C_1—C_4$.

De façon préférentielle, n est un nombre entier compris entre 0 et 6 inclus, de façon encore plus préférée entre 0 et 3 inclus.

Dans ce qui suit, sauf indication contraire, les pourcentages sont en poids.

Selon un mode de réalisation préférentiel de l'invention, on utilise un agent sequestrant de formule (VI) dans laquelle $R_1$, $R_2$, $R_3$ et $R_4$ représentent un atome d'hydrogène ou un radical méthyle, $R_5$ est l'atome d'hydrogène ou un radical méthyle et n est compris entre 0 et 6 inclus.

Parmi ces derniers, on préfère encore plus particulièrement mettre en oeuvre les agents séquestrants suivants:

la tris(oxa-3 butyl)amine de formule:
$N—(CH_2—CH_2—O—CH_3)_3$
la tris(dioxa-3,6-heptyl)amine de formule:
$N—(CH_2—CH_2—O—CH_2—O—CH_3)_3$
la tris(trioxa-3,6,9 décyl)amine de formule:
$N—(CH_2—CH_2—O—CH_2—CH_2—O—CH_2—CH_2—O—CH_3)_3$
la tris(dioxa-3,6 octyl)amine de formule:
$N—(CH_2—CH_2—O—CH_2—CH_2—O—C_2H_5)_3$
la tris(trioxa-3,6,9 undécyl)amine de formule:
$N—(CH_2—CH_2—O—CH_2—CH_2—O—CH_2—CH_2—O—C_2H_5)_3$
la tris(dioxa-3,6 nonyl)amine de formule:
$N—(CH_2—CH_2—O—CH_2—CH_2—O—C_3H_7)_3$

la tris(trioxa-3,6,9 dodécyl)amine de formule:
$N{+}CH_2{-}CH_2{-}O{-}CH_2{-}CH_2{-}O{-}CH_2{-}CH_2{-}O{-}C_3H_7)_3$
la tris(dioxa-3,6 décyl)amine de formule:
$N{+}CH_2{-}CH_2{-}O{-}CH_2{-}CH_2{-}O{-}C_4H_9)_3$
la tris(trioxa-3,6,9 tridécyl)amine de formule:
$N{+}CH_2{-}CH_2{-}O{-}CH_2{-}CH_2{-}O{-}CH_2{-}CH_2{-}O{-}C_4H_9)_3$
la tris (tetra-oxa-3,6,9,12 tridécyl)amine de formule:
$N\text{-}\{CH_2{-}CH_2{-}O(CH_2{-}CH_2{-}O)_3{-}CH_3\}_3$
la tris(hexa-oxa-3,6,9,12,15,18 nonadecyl)amine de formule:
$N\text{-}\{CH_2{-}CH_2{-}O{-}(CH_2{-}CH_2{-}O)_5CH_3\}_3$
la tris(dioxa-3,6-méthyl-4-heptyl)amine de formule:
$N\text{-}\{CH_2{-}CH_2{-}OCH{-}(CH_3){-}CH_2{-}O{-}CH_3\}_3$
la tris(dioxa-3,6 diméthyl-2,4 heptyl)amine de formule:
$N\text{-}\{CH_2CH{-}(CH_3){-}OCH(CH_3){-}CH_2{-}O{-}CH_3\}_3$
la triéthanolamine:
$N{+}CH_2{-}CH_2{-}OH)_3$
la tris(oxa-3 hydroxy-5 pentyl)amine:
$N{+}CH_2{-}CH_2{-}O{-}CH_2{-}CH_2{-}OH)_3$
la tris(dioxa-3,6 hydroxy-8 octyl)amine:
$N{+}CH_2{-}CH_2{-}O{-}CH_2{-}CH_2{-}OCH_2{-}OH)_3$
la tris(diméthyl-2,4 oxa-3 hydroxy-pentyl)amine:

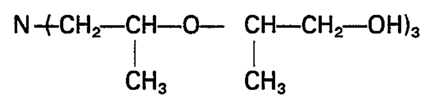

Selon un mode de mise en oeuvre particulier de l'invention, on utilise comme composé complexant les agents séquestrants, greffés sur des supports polymères organiques réticulés. Ces composés complexants greffés sont notamment ceux décrits dans la demande de brevet européen n° 46706 qui est citée comme référence.

Les agents séquestrants greffés décrits dans la demande de brevet européen n° 46706 sont caractérisés en ce qu'ils sont constitués par un support polymère organique réticulé et par une pluralité de groupes fonctionnels, fixés sur ledit support, de formule générale:

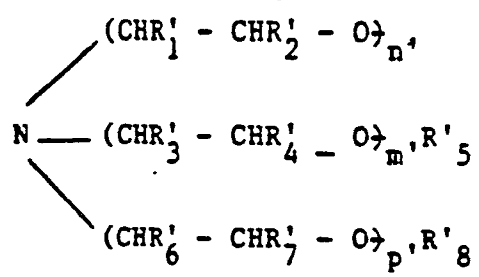

(VII)

dans laquelle $R'_1$, $R'_2$, $R'_3$, $R'_4$, $R'_6$ et $R'_7$ identiques ou différents sont choisis parmi un atome d'hydrogène et un radical alkyle ayant de 1 à 4 atomes de carbone, $R'_5$ et $R'_8$ identiques ou différents sont choisis parmi un atome d'hydrogène, un radical alkyle ou cycloalkyle ayant de 1 à 12 atomes de carbone, un radical phényle, un radical alkylphényle ou phénylalkyle dont la partie alkyle est en $C_1$—$C_{12}$ et dans laquelle n', m', et p' identiques ou différents sont supérieurs ou égaux à 1 et inférieurs ou égaux à 10.

Selon un autre mode de réalisation préféré de l'invention, on utilise un agent séquestrant supporté constitué par un support polymère organique réticulé et par une pluralité de groupes fonctionnels fixés sur ledit support, de formule générale (VII) dans laquelle $R'_1$, $R'_2$, $R'_3$, $R'_4$, $R'_6$, et $R'_7$ identiques ou différents, représentent un atome d'hydrogène ou le radical méthyle et $R'_5$ et $R'_8$ identiques ou différents représentent un atome d'hydrogène ou un radical alkyle en $C_1$—$C_4$. Selon un autre mode de réalisation préférentiel de l'invention, n', m' et p' identiques ou différents sont supérieurs ou égaux à 1 et inférieurs ou égaux à 6.

On peut citer comme exemples de groupes fonctionnels, les groupes de formules suivantes:

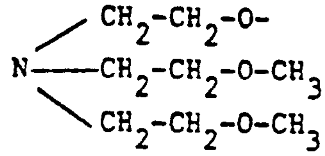

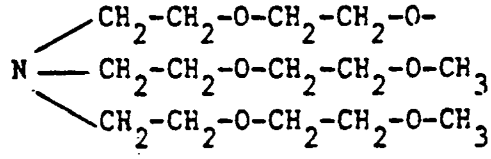

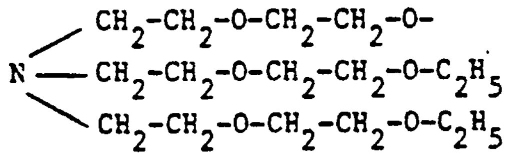

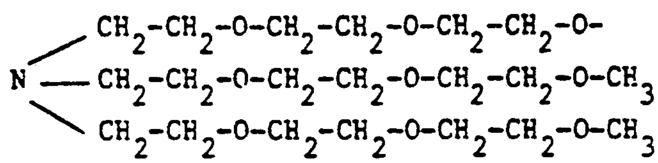

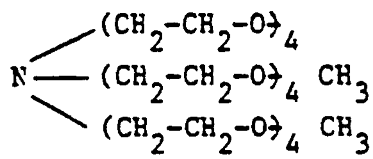

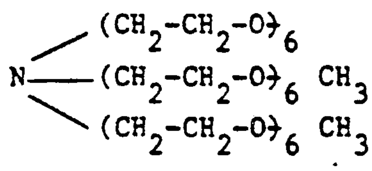

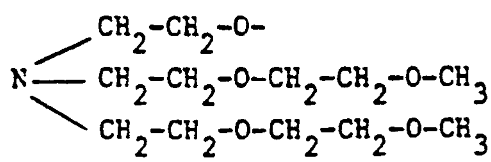

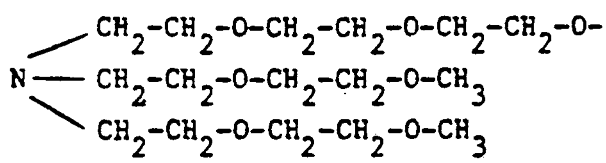

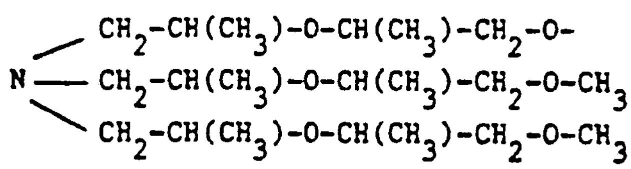

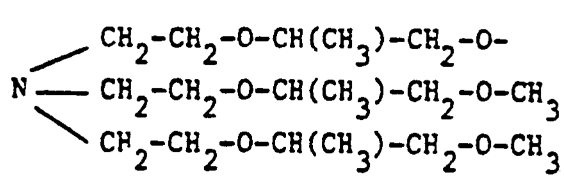

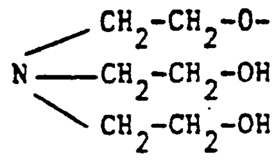

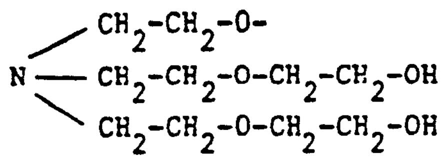

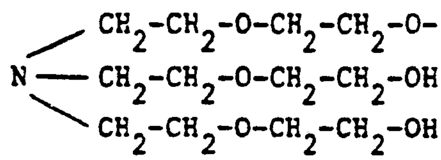

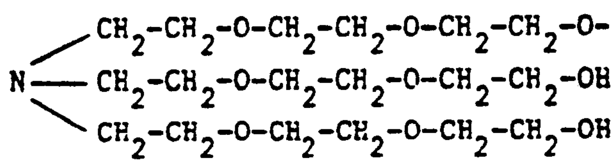

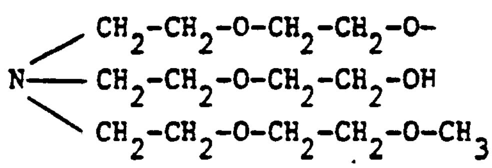

Le support peut dériver de tout polymère organique réticulé comportant des groupements substituables par les groupements fonctionnels de formule (VII).

On peut citer comme exemples de polymères organiques adaptés à la présente invention, les polymères dérivés de composés vinylaromatiques tels que le styrène, le méthylstyrène et les copolymères de composés vinylaromatiques et de diènes conjugués en $C_4$—$C_6$ tels que les copolymères du styrène et du butadiène et du styrène et de l'isoprène.

On préfère tout particulièrement utiliser comme polymère organique le polystyrène, l'agent de réticulation étant alors, suivant un mode de réalisation préférentiel, le divinylbenzène. Le taux de réticulation est un facteur important. Il est en effet nécessaire que les groupes fonctionnels de formule (II) greffés sur le polystyrène soient actifs. Pour cela, il faut que les molécules du solvant dans lequel l'agent séquestrant supporté sera mis en oeuvre, dans les applications précisées plus loin, pénètrent à l'intérieur du polymère. Dans ce but, il est nécessaire que le taux de réticulation ne soit pas trop important pour ne pas empêcher la pénétration du solvant et des réactifs. On préfère utiliser un polystyrène dont le taux de réticulation par le divinylbenzène est inférieur à environ 10%. Encore plus préférentiellement, le taux de réticulation est inférieur à 5% environ.

Le groupement substitutuable est de préférence le chlore ou le brome du radical chloro ou bromo methyl —$CH_2Cl$ ou —$CH_2Br$ fixé sur le noyau benzénique du polystyrène.

On préfère tout particulièrement que le pourcentage de noyaux benzéniques du polystyrène portant en groupement fonctionnel soit supérieur à 5%. Encore plus préférentiellement, ce pourcentage est supérieur à 10%.

On peut représenter les agents séquestrants supportés préférés par la formule suivante:

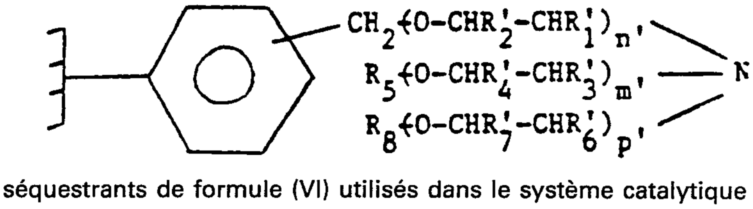

Les agents séquestrants de formule (VI) utilisés dans le système catalytique de l'invention sont des

produits bien connus qui sont notamment décrits dans les brevets franç'ais 1.302.365 et 2.450.120 cités comme référence.

Selon un deuxième mode de mise en oeuvre particulier de l'invention, le composé complexant est un polyéther macrocyclique ayant de 15 à 30 atomes dans le cycle et constitué de 4 à 10 unités —O—X dans lesquelles X est soit —$CHR_6$—$CHR_7$— soit —$CHR_6$—$CHR_8$—$CR_9R_7$—, $R_6$, $R_7$, $R_8$, et $R_9$ identiques ou différents étant un atome d'hydrogène ou un radical alkyle ayant de 1 à 4 atomes de carbone, un des X pouvant être —$CHR_6$—$CHR_8$—$CR_9R_7$— quand les unités —O—X comprennent le groupement —O—$CHR_6$—$CHR_7$—.

Selon un troisième mode de mise en oeuvre particulier de l'invention, le composé complexant est un composé macrocyclique ou bicyclique de formule générale VIIIa ou VIIIb

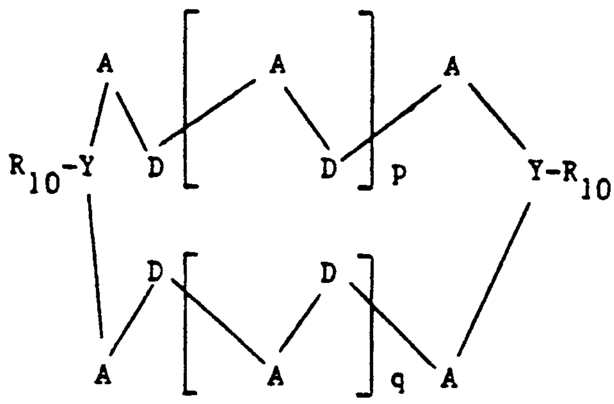

(VIIIa)

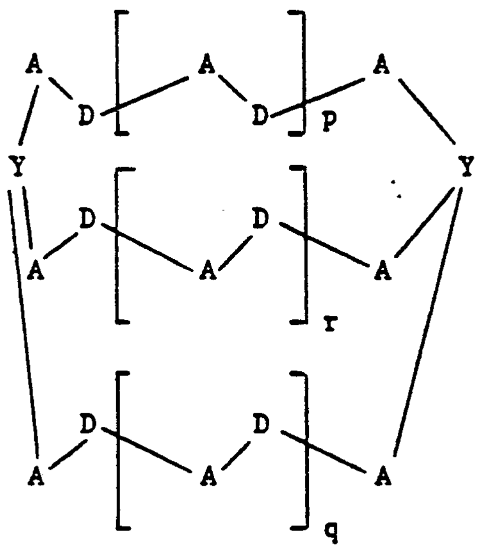

(VIIIb)

dans lesquelles:

Y représente N ou P

A représente un groupement alkylène ayant de 1 à 3 atomes de carbone

D représente O, S ou N—$R_{11}$ où $R_{11}$ représente un radical alkyle ayant de 1 à 6 atomes de carbone

$R_{10}$ représente un radical alkyle ayant de 1 à 6 atomes de carbone, p, q et r identiques ou différents sont des nombres entiers compris entre 1 et 5.

Selon un quatrième mode de mise en oeuvre particulier de l'invention, on utilise un mélange d'au moins deux des composés complexants définis ci-dessus. Selon un cinquième mode de mise en oeuvre particulier de l'invention, on utilise comme composé complexant les agents séquestrants, les polyéthers macrocycliques (encore nommés "Ethers Couronne") et les composés macrocycliques ou bicycliques (encore nommés "Cryptants") greffés sur des supports polymères organiques réticulés. Ces composés complexants greffés sont notamment ceux décrits dans la demande de brevet européen n° 460706 lorsqu'il s'agit des agents greffés et dans l'article Angew. Chem. Int. Ed. Engl. 18, 421—429 (1979) lorsqu'il s'agit des Ethers Couronne ou des Cryptants greffés.

Les polyéthers macrocycliques qui peuvent être mis en oeuvre dans le procédé selon l'invention sont

connus sous l'appellation générale d'"éthers couronnes" et sont décrits dans le brevet français 69.43879 publié sous le numéro 2.026.481.

On peut citer comme exemples d'éthers couronnes pouvant être utilisés selon l'invention:

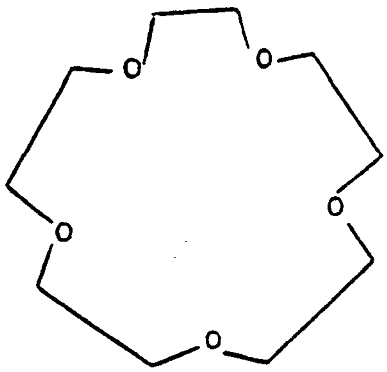

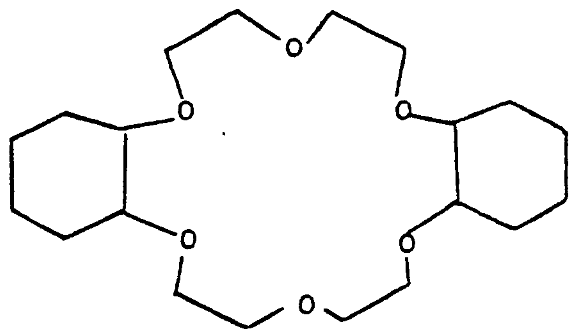

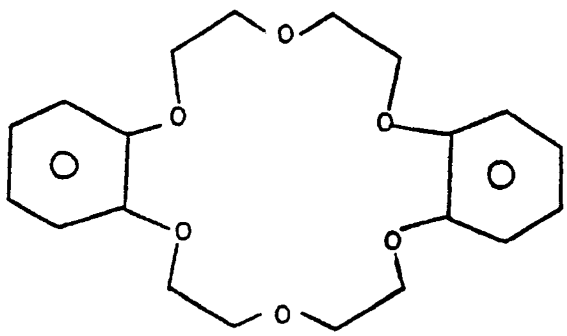

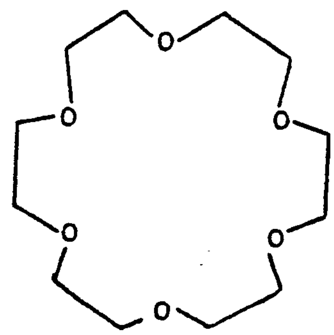

Les composés macrocycliques et bicycliques sont décrits dans le brevet français 70.21079 publié sous le numéro 2.052.947. On peut citer comme exemples de tels composés concernant la mise en oeuvre du procédé selon l'invention:

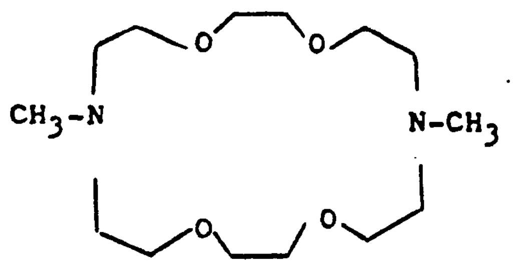

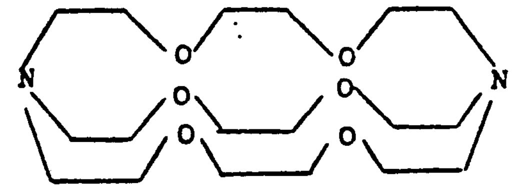

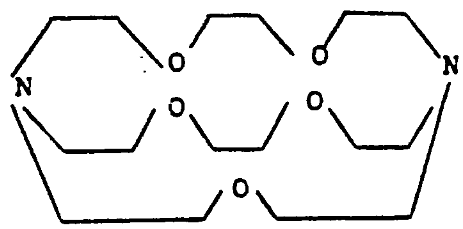

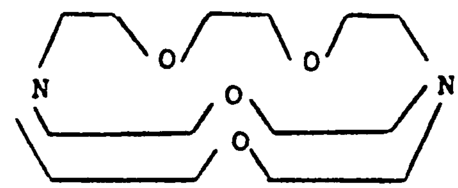

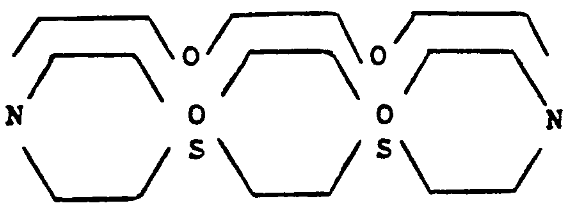

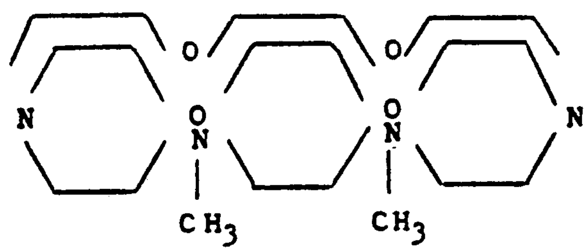

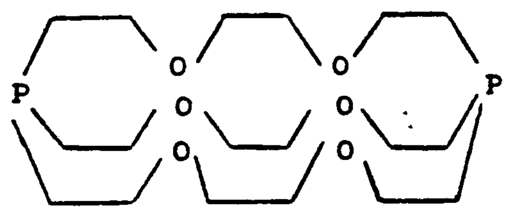

Le procédé selon l'invention peut être mis en oeuvre en présence de solvant ou en masse. Dans ce dernier cas, c'est l'organopolysilazane de départ qui joue le rôle de solvant. Quand on utilise un tiers solvant, ce dernier doit répondre à un certain nombre de conditions : il faut qu'il solubilise l'organopolysilazane de départ; il faut aussi qu'il soit inerte chimiquement vis-à-vis des organopolysilazanes introduits ou formés.

On choisit, de préférence, un solvant comme par exemple, le benzène, le toluène, le cyclohexane, l'heptane, le tétrahydrofurane, le dioxanne et l'éther isopropylique.

Le choix du composé complexant le plus adapté à la mise en oeuvre du procédé selon l'invention se fait, en outre, en tenant compte de la taille du cation du sel minéral ionique. Plus la taille du cation sera importante, plus le nombre d'atomes d'oxygène contenus dans la molécule du composé complexant devra être élevé.

Le procédé selon l'invention peut être mis en oeuvre à une température comprise entre la température ambiante (20°C) et 200°C environ de préférence entre 30 et 150°C pendant une durée comprise généralement entre 1 mn et 24 h.

On opère de préférence à la pression atmosphérique sous atmosphère inerte. Bien entendu, des pressions supérieures ou inférieures à la pression atmosphérique ne sont pas exclues.

On utilise le composé complexant en quantité telle que le rapport molaire de l'agent complexant au sel minéral ionique est, de préférence, compris entre 0,05 et 20. Encore plus préférentiellement, ce rapport est compris entre 0,10 et 2.

Le système catalytique selon l'invention est utilisé généralement à des concentrations comprises entre 0,01 et 5 g de sel minéral ionique par kg d'organopolysilazane de départ et le composé complexant est utilisé à une concentration comprise entre 0,001 et 20 g par kg d'organopolysilazane de départ.

De façon tout à fait inattendue, le procédé de traitement selon l'invention permet d'une part d'incorporer les volatils dans les macromolécules de l'aminolysat et d'autre part en présence de motifs trifonctionnels siliciés (par exemple $T^N$) de réarranger et de surréticuler le réseau de l'aminolysat qui de ce

fait est thermiquement plus stable lors de la pyrolyse. Le traitement catalytique de l'inveniton provoque donc, suivant la nature de l'aminolysat de départ, une polymérisation et/ou une copolymérisation et/ou un réarrangement des molécules.

Une autre avantage très important découlant du traitement catalytique selon l'invention est l'obtention d'un aminolysat traité ayant une résistance améliorée à l'oxygène et à l'humidité de l'air.

Le procédé de l'invention peut être effectué sur des polysilazanes divers utilisés seuls ou en mélange par exemple sur des organopoly(disilyl)silazanes ou des organopolysilazanes de différentes natures : on peut ainsi effectuer notamment:

une polymérisation de l'aminolysat de $(CH_3)_2SiCl_2$

une polymérisation de l'aminolysat de $(CH_3)_2ClSiSiCl(CH_3)_2$

une copolymérisation d'aminolysat de $(CH_3)_2SiCl_2$ et de l'aminolysat de $CH_3SiCl_3$

un réarrangement d'un polydiméthylsilazane en présence d'un aminolysat de $CH_3SiCl_3$

un réarrangement d'un coaminolysat de $(CH_3)_2SiCl_2$ et de $CH_3SiCl_3$

un réarrangement d'un coaminolysat de $(CH_3)_2SiCl_2$ et de $(CH_3)_{3-b}$ $Cl_bSi$ Si $Cl_c$ $(CH_3)_{3-c}$

b et c étant définis comme dans la formule (V) ci-dessus avec $b + c > 2$.

Dans l'application revêtement, pellicules, couches minces, la composition organopolysilazane traitée selon l'invention est de préférence utilisée sans solvant. Dans ce cas, on choisit une viscosité à 25°C comprise entre 10 et 5000 mPa.s, de préférence entre 100 et 1000 mPa.s.

Des viscosités supérieures peuvent être utilisées, mais il est alors nécessaire quand on veut utiliser les compositions pour enduire ou imprégner un support, de solubiliser la composition dans un solvant organique compatible avec les polysilazanes comme le benzène, le toluène, l'hexane, le cyclohexane, l'éther isopropylique, l'éther éthylique, le dichlorométhane et le chlorobenzène.

Dans l'application fibres on doit utiliser des viscosités supérieures à 5000 mPa.s. On peut opérer sans solvant à l'état fondu ou en solution, la réticulation s'effectuant à la sortie de la filière par passage dans un four et/ou sous rayonnement (UV, faisceaux d'électron).

Les compositions polysilazanes selon l'invention peuvent contenir en outre des charges de préférence choisies parmi $SiO_2$, $Si_3N_4$, SiC, BN, $B_2O_3$, $B_4$ C, AlN, $Al_2O_3$, $Al_4C_3$, TiN, $TiO_2$, TiC, $Z_rO_2$, $Z_rC$, $VO_2$ etc...

La composition polysilazane selon l'invention peut en outre servir de matrice pour des fibres céramiques réalisées notamment en SiC, $SiO_2$, $Si_3N_4$, $B_4C$ etc...

La composition polysilazane selon l'invention est particulièrement utile pour revêtir ou imprégner des supports rigides ou souples en métal ou en fibres céramiques.

Les supports recouverts ou imprégnés de la composition durcie, ou les fibres, peuvent subir immédiatement ou ultérieurement un traitement de pyrolyse de préférence sous vide ou sous pression ou sous atmosphère inerte avec une montée en température allant de la température de réticulation à 1500—2000°C, suivant la nature de la céramique ou du liant désirée.

La composition selon l'invention permet donc de faire des demi-produits intermédiaires pouvant être conservés à l'air ambiant et qui peuvent être ultérieurement pyrolysés.

Ceci constitue donc un procédé particulièrement avantageux pour déposer ou imprégner sur un support une matière céramique, et pour obtenir des fibres de céramique et des liants de frittage.

Dans les exemples suivants, illustrant l'invention sans en limiter la portée, on analyse les polysilazanes obtenus traités catalytiquement ou non, par thermogramométrie dynamique (TGA) en les pyrolysant de la température ambiante (20°C) à 1400°C sous azote avec une vitesse de montée en température de 2°C/min. On indique dans les exemples le rendement TGA (% en poids de résidu solide à 1300—1500°C).

La viscosité est mesurée à 25°C et est donnée en mPa.s De plus dans les formules Me = $CH_3$, Vi = $CH_2$=CH, les réactions d'ammonolyse et de coammonolyse sont effectuées dans un premier réacteur J de 3 litres de forme cylindrique (muni d'une double enveloppe pour refroidir le volume réactionnel). Le réacteur est surmonté d'un condenseur de gaz. L'agitation mécanique est assurée par deux turbines RUSHTON® (une turbine à pales droites, une turbine à pales inclinées) disposées le long de l'arbre d'agitation. l'introduction de gaz $N_2$ et $NH_3$ se fait par l'intermédiaire d'un tube fin plongeant dans la solution de façon à faire apparaitre $NH_3$ juste sous la lère turbine d'agitation. En fin d'ammonolyse le mélange réactionnel est soutiré et est introduit dans un 2ème réacteur II muni d'une agitation mécanique (turbine RUSHTON® à pales droites) et d'un lit filtrant (porosité moyenne 10 µm). Les ammonolysats sont filtrés et les solvants de rinçage sont introduite dans un troisième réacteur III de 6 litres muni d'une double enveloppe et d'une agitation mécanique, d'une turbine de RUSHTON® à pales droites, et est inerté sous $N_2$ ou mis sous vide 25 mbar où l'on effectue le traitement catalytique.

L'ensemble de l'installation est mis sous atmosphère inerte plusieurs heures avant la manipulation. l'ensemble de la réaction, ammonolyse, filtration, évaporation du solvant se fait sour azote sec. les produits obtenus sont placés dans des flacons étanches inertés à l'azote et sont conservés, pesés, manipulés sous boîte à gants inertée à l'azote.

## Exemple 1

On introduit dans le réacteur I 258 g de $Me_2SiCl_2$ (2 moles) de pureté supérieure à 99% en présence de 1,3 l d'éther isopropylique sec. On introduit l'ammoniac dans le réacteur I suivant un débit de 10 $cm^3/s$ pendant 6 h. à température de la réaction est maintenue à 2°C. Après filtration de $NH_4Cl$ on récupère 140 g d'un poysilazane cyclique. Par rectification à 188°C on récupère $D_3^N$ séché sur $CaCl_2$.

Exemple 2

2 moles de $CH_3SiCl_3$ (299 g) de pureté > 99% sont ammonolysés dans l'éther isopropylique à 2°C. L'ammoniac est introduit avec un débit de 10 $cm^3/s$ pendant 8 heures (soit environ 12 moles de $NH_3$ engagées). Après élimination du chlorure d'ammonium et évaporation du solvant sous vide, on récupère un solide blanc ne comportant que des motifs trifonctionnels appelés ci-après $T_X^N$.

Exemple 3

On effectue une coammonolyse. Dans le réacteur J on introduit sous azote sec:

0,72 mole de $(CH_3)_2SiCl_2$ (92,5 g) et 0,72 mole de $CH_3SiCl_3$ (107,2 g), en présence de 1,1 l d'éther isopropylique.

Le mélange est maintenu à température ambiante pendant l'introduction de $NH_3$ gazeux (réaction légèrement exothermique). Le débit d'introduction de $NH_3$ est maintenu à environ 6 ml/s de gaz et l'addition a lieu en 6 h.

Il se forme au cours de l'essai des quantités importantes de chlorhydrate d'ammonium qui épaississent le solution. En fin d'essai, on filtre dans le réacteur II le $NH_4Cl$ formé sur verre fritté (diamètre moyen des portes 10 µm). Le précipité est lavé plusieurs fois à l'aide de solvant sec. La solution récupérée est limpide. Le solvant est évaporé sous vide (25 mbar à 75°C) et les dernières traces de solvant sont éliminées à 70°C sous 2 mbars.

Les caractéristiques des produits sont portées dans le tableau I ci-après.

TABLEAU I

| T(°C) d'ammonolyse | Solvant | molaire $(CH_3)_2SiCl_2$ | $CH_3SiCl_3$ | Rdt % en coammolysat | Viscosité mPa.s | % $D^{N*}$ | % $T^{N*}$ | RR % | TGA % | $\frac{RR \times TGA}{100}$ |
|---|---|---|---|---|---|---|---|---|---|---|
| 21°C | Ether iso | 50 | 50 | 92,3 | 90 | 49 | 51 | 53 | 65 | 33 |

* Déterminé par RMN du $^{29}Si$

$T^N$ = 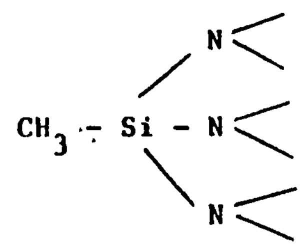

Exemple 4

On introduit dans le réacteur III un mélange d'ammonolysat de l'exemple 1 et de l'exemple 2 en quantité telle que l'on ait un dans le mélange d'ammonolysat des % molaires de motifs $D^N$ et de $T^N$ voulus.

La copolymérisation est rapide et mène à la formation d'un polysilazane réticulé dont la pyrolyse donne un rendement total en céramique (RR X Rdt TGA)/100 supérieur à celui de l'ammonolysat de $MeSiCl_3$ seul (qui est de 20) ou de $(CH_3)_2SiCl_2$ seul (qui est nul).

Le rendement en polymère (RR) est mesuré de la manière suivante: on introduit environ exactement 2 g de produit dans un bécher sous $N_2$ sec que l'on porte à 175°C pendant 2 h sous un vide de 1,3 millibar(mbar). Après refroidissement le bécher est pesé, ce qui permet de mesurer le rendement pondéral en polymère. Les résultats sont rassemblés dans le tableau II ci-après.

TABLEAU II

| Exemple | % molaire $D^N$ | % molaire $T^N$ | Catalyseur | Concentration en catalyseur g.kg$^{-1}$ | T °C | Durée | RR % | TGA % | $\frac{RR \times TGA}{100}$ |
|---|---|---|---|---|---|---|---|---|---|
| 4 | 70 | 30 | KF + THA | 3<br>16 | 110 | 2h30 | 56 | 58 | 33 |

Exemples 5, 6 et Exemples Comparatifs 7C et 8C

Sur le coammonolysat obtenu à l'exemple 3, on effectue le traitement catalytique dans le réacteur III. Les conditions de ce traitement et les caractéristiques obtenues sont rassemblées dans le tableau III ci-après.

Dans l'exemple comparatif 7C, on n'introduit pas de catalyseur et l'on ne chauffe pas. Dans l'exemple comparatif 8C on n'introduit pas de catalyseur et l'on chauffe à 110°C.

On voit d'après ces exemples que le traitement catalytique permet d'augmenter de façon notable le rendement en céramique.

| Exemple | Catalyseur | Concentration en catalyseur g.kg$^{-1}$ | T °C | Durée | RR % | TGA % | $\frac{RR \times TGA}{100}$ |
|---|---|---|---|---|---|---|---|
| 5 | KF + THA | 1,2<br>6,5 | 110 | 2 h | 79 | 55 | 44 |
| 6 | KF + TDA | 1,9<br>10 | 140 | 1h | 72 | 62 | 45 |
| 7C | — | — | — | — | 53 | 65 | 34 |
| 8C | — | — | 110 | 2h | 64 | 49 | 30 |

**Revendications**

1. Procédé de traitement d'un polysilazane, caractérisé en ce qu'on traite catalytiquement au moins un polysilazane exempt d'atome d'hydrogène lié directement aux atomes de silicium choisi parmi un organopolysilazane et un organopoly(disilyl)silazane et leurs mélanges dans lesquels les radicaux organiques liés aux atomes de silicium sont des radicaux hydrocarbonés en présence d'une quantité catalytiquement efficace d'un système catalytique comprenant un sel minéral ionique de formule $M^+A^-$ et un composé complexant le cation $M^+$ dudit sel, le sel minéral ionique étant utilisé à une concentration comprise entre 0,01 et 5 g de sel par kg d'organopolysilazane de départ et l'agent complexant étant utilisé à une concentration comprise entre 0,001 et 20 g d'agent par kg d'organopolysilazane de départ, le rapport molaire du composé complexant au sel minéral ionique étant compris entre 0,05 et 20.

2. Procédé selon la revendication 1, caractérisé en ce que la réaction s'effectue en masse.

3. Procédé selon la revendication 1, caractérisé en ce que la réaction s'effectue en solution dans un solvant organique.

4. Procédé selon l'une quelconque des revendications précédentes, caractérisé en ce que le sel minéral ionique est choisi parmi ceux dans lesquels $M^+$ représente un alcalin, un alcalino-terreux, un ammonium quaternaire et $A^-$ représente un halogène, $SCN^-$, $CN^-$, $CO_3^{--}$.

5. Procédé selon l'une quelconque des revendications précédentes, caractérisé en ce que le composé complexant le cation du sel minéral ionique est un agent séquestrant de formule:

$$N-\{CHR_1-CHR_2-O-(CHR_3-CHR_4-O)_n-R_5\}_3 \qquad (VI)$$

dans laquelle n est un nombre entier supérieur ou égal à 0 et 10 inclus; $R_1$, $R_2$, $R_3$ et $R_4$, identiques ou différents, sont choisis parmi un atome d'hydrogène et un radical alkyle en $C_1$—$C_4$ et les radicaux $R_5$, identiques ou différents, sont choisis parmi un atome d'hydrogène, un radical alkyle ou cycloalkyle en $C_1$—$C_{12}$, un radical alkylphényle ou phénylalkyle dont la partie alkyle est en $C_1$—$C_2$.

6. Procédé selon l'une quelconque des revendications 1 à 4, caractérisée en ce que le composé complexant est un polyéther macrocyclique ayant de 15 à 30 atomes dans le cycle et constitué de 4 à 10 unités —O—X dans lesquelles X est soit $—CHR_6—CHR_7—$, soit $—CHR_6—CHR_8—CR_9R_7—$, $R_6$, $R_7$, $R_8$ et $R_9$, identiques ou différents étant un atome d'hydrogène ou un radical alkyle ayant de 1 à 4 atomes de carbone, un des X pouvant être $—CHR_6—CHR_8—CR_9R_7—$ quand les unités —O—X comprennent le groupement $—O—CHR_6—CHR_7—$.

7. Procédé selon l'une quelconque des revendications 1 à 4, caractérisé en ce que le composé complexant est un composé macrocyclique ou bicyclique de formules générales VIIIa ou VIIIb:

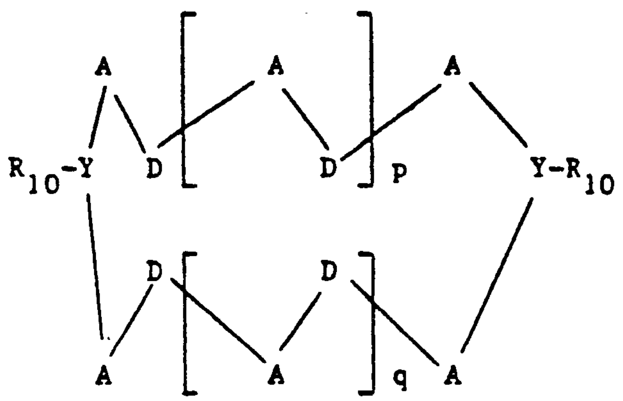

(VIIIa)

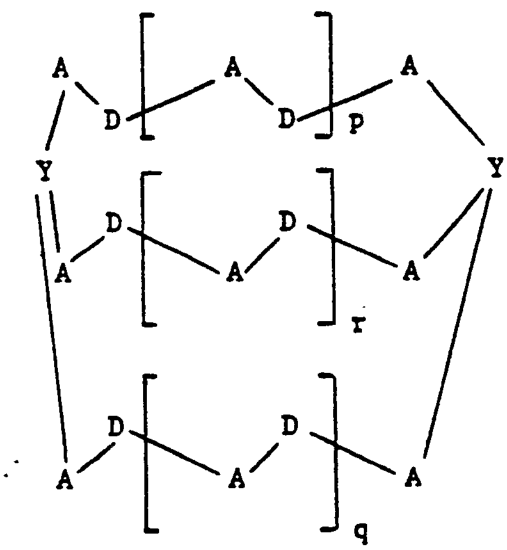

(VIIIb)

dans lesquelles:

Y représente N ou P,.

A représente un groupement alkylène ayant de 1 à 3 atomes de carbone,

D représente O, S ou $N—R_{11}$ où $R_{11}$ représente un radical alkyle ayant de 1 à 6 atomes de carbone,

$R_{10}$ représente un radical alkyle ayant de 1 à 6 atomes de carbone, p, q et r, identiques ou différents sont des nombres entiers compris entre 1 et 5.

8. Procédé selon l'une quelconque des revendications précédentes, caractérisé en ce que le composé complexant est greffé sur un support organique réticulé.

9. Procédé selon l'une quelconque des revendications précédentes, caractérisé en ce que l'on opère à une température comprise entre 20 et 200°C.

**Patentansprüche**

1. Verfahren zur Behandlung eines Polysilazans, dadurch gekennzeichnet, daß man wenigstens ein Polysilazan, das frei von Wasserstoffatomen ist, die direkt an die Siliziumatome gebunden sind, ausgewählt aus einem Organopolysilazan und einem Organopoly(disilyl)silazan und deren Gemischen, in denen die organischen an die Siliziumatome gebundenen Reste Kohlenwasserstoffreste sind, in Gegenwart einer katalytisch wirksamen Menge eines katalytischen Systems umfassend ein ionisches Mineralsalz der Formel $M^+A^-$ und eine das Kation $M^+$ dieses Salzes komplexierende Verbindung, wobei das eingesetzte ionische Mineralsalz in einer Konzentration zwischen 0,01 und 5 g Salze pro kg Ausgangs-Organopolysilazan verwendet wird und das Komplexierungsagens in einer Konzentration zwischen 0,001 und 20 g Agans pro kg Ausgangs-Organopolysilazan verwendet wird, wobei das molare Verhältnis von komplexierender Verbindung zu ionischem Mineralsalz zwischen 0,05 und 20 liegt, katalytisch behandelt.

2. Verfahren nach Anspruch 1, dadurch gekennzeichnet, daß die Reaktion in der Masse erfolgt.

3. Verfahren nach Anspruch 1, dadurch gekennzeichnet, daß die Reaktion in Lösung in einem organischen Lösungsmittel erfolgt.

4. Verfahren nach einem der vorhergehenden Ansprüche, dadurch gekennzeichnet, daß das ionische Mineralsalz ausgewählt wird aus denjenigen, bei denen $M^+$ Alkali, Erdalkali oder quaternäres Ammonium darstellt und $A^-$ ein Halogen, $SCN^-$, $CN^-$ oder $CO_3^{--}$ darstellt.

5. Verfahren nach einem der vorhergehenden Ansprüche, dadurch gekennzeichnet, daß die das Kation des ionischen Mineralsalzes komplexierende Verbindung ein Maskierungsmittel der Formel:

$$N—\{CHR_1—CHR_2—O—(CHR_3—CHR_4—O)_n—R_5\}_3 \qquad (VI)$$

ist, in der n eine ganze Zahl größer oder gleich 0 bis einschließlich 10 ist, $R_1$, $R_2$, $R_3$ und $R_4$ identisch oder verschieden sind und ausgewählt werden aus einem Wasserstoffatom und einem Alkylrest mit $C_1$—$C_4$ und die Reste $R_5$ identisch oder verschieden sind und ausgewählt werden aus einem Wasserstoffatom, einem Alkylrest oder Cycloalkylrest mit $C_1$—$C_{12}$, einem Alkylphenylrest oder Phenylalkylrest, dessen Alkylteil ein $C_1$—$C_2$-Rest ist.

6. Verfahren nach einem der Ansprüche 1 bis 4, dadurch gekennzeichnet, daß die Komplexierende Verbindung ein makrocyclischer Polyether mit 15 bis 30 Atomen im Ring ist bestehend aus 4 bis 10 —O—X-Einheiten, in denen X entweder —$CHR_6$—$CHR_7$- ist oder —$CHR_6$—$CHR_8$—$CR_9R_7$—, wobei $R_6$, $R_7$, $R_8$ und $R_9$ identisch oder verschieden sind und ein Wasserstoffatom oder einen Alkylrest mit 1 bis 4 Kohlenstoffatomen darstellen, wobei einer der Reste X —$CHR_6$—$CHR_8$—$CR_9R_7$— sein kann, wenn die Einheiten —O—X— die Gruppe —O—$CHR_6$—$CHR_7$— umfassen.

7. Verfahren nach einem der Ansprüche 1 bis 4, dadurch gekennzeichnet, daß die komplexierende Verbindung eine makrocyclische oder bicyklische Verbindung der allgemeinen Formeln VIIIa und VIIIb ist:

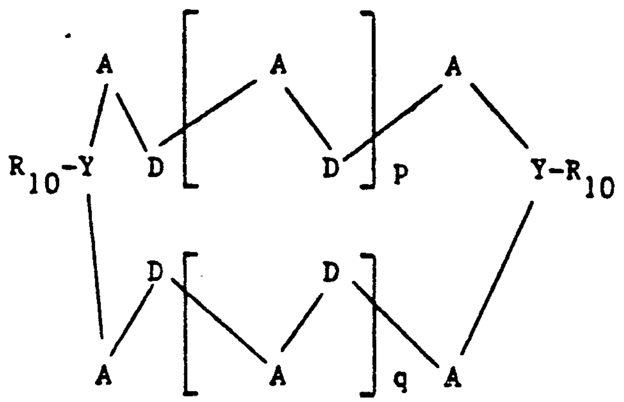

(VIIIa)

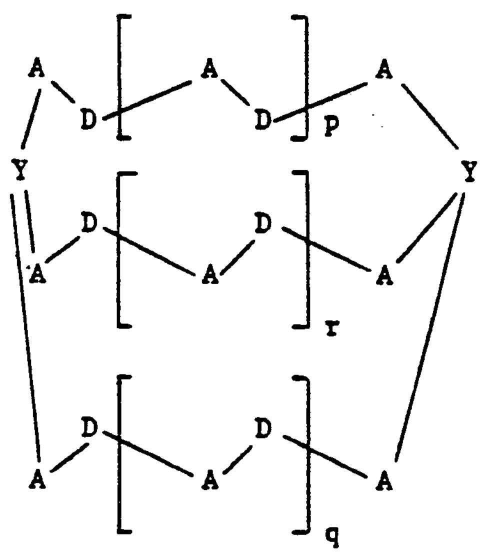

(VIIIb)

in denen

Y darstellt N oder P,

A darstellt eine Alkylengruppe mit 1 bis 3 Kohlenstoffatomen,

D darstellt O, S oder N—$R_{11}$, wobei $R_{11}$ einen Alkylrest mit 1 bis 6 Kohlenstoffatomen darstellt,

$R_{10}$ einen Alkylrest mit 1 bis 6 Kohlenstoffatomen darstellt,

p, q und r identisch oder verschieden sind und ganze Zahlen von 1 bis 5 sind.

8. Verfahren nach einem der vorhergehenden Ansprüche, dadurch gekennzeichnet, daß die komplexierende Verbindung auf einen vernetzten organischen Träger aufgepfropft ist.

9. Verfahren nach einem der vorhergehenden Ansprüche, dadurch gekennzeichnet, daß man bei einer Temperatur zwischen 20 und 200°C arbeitet.

**Claims**

1. Process for the treatment of a polysilazane, characterized in that catalytic treatment takes place of at least one polysilazane free from hydrogen atoms and directly bonded to the silicon atoms chosen from among an organopolysilazane and an organopoly(disilyl)silazane and their mixtures in which the organic radicals bonded to the silicon atoms are hydrocarbnon radicals in the presence of a catalytically effective quantity of a catalyst system incorporating an ionic mineral salt of formula $M^+A^-$ and a compound

complexing the cation $M^+$ of said salt, the ionic mineral salt being used at a concentration between 0.01 and 5 g of salt per kg of starting organopolysilazane and the complexing agent being used at a concentration between 0.001 and 20 g of agent per kg of starting organopolysilazane, the molar ratio of the complexing compound to the ionic mineral salt being between 0.05 and 20.

2. Process according to claim 1, characterized in that the reaction takes place in the mass.

3. Process according to claim 1, characterized in that the reaction takes place in solution in an organic solvent.

4. Process according to any one of the preceding claims, characterized in that the ionic mineral salt is chosen from among those in which $M^+$ represents an alkali metal, an alkaline earth metal, a quarternary ammonium and $A^-$ represents a halogen, $SCN^-$, $CN^-$, $CO^{--}{}_3$.

5. Process according to any one of the preceding claims, characterized in that the compound complexing the cation of the ionic mineral salt is a sequestring agent of formula:

$$N—\{CHR_1—CHR_2—O—(CHR_3—CHR_4—O)_n—R_5)_3 \qquad (VI)$$

in which n is an integer equal to or greater than 0 and 10 inclusive; $R_1$, $R_2$, $R_3$ and $R_4$ which can be the same or different, are chosen from among a hydrogen atom and a $C_1—C_4$ alkyl radical and the radicals $R_5$, which can be the same or different, are chosen from among a hydrogen atom, a $C_1—C_{12}$ alkyl or cycloalkyl radical and an alkylphenyl or phenylalkyl radical, in which the alkyl moiety consists of $C_1—C_2$.

6. Process according to any one of the claims 1 to 4, characterized in that the complexing compound is a macrocyclic polyether having 15 to 30 atoms in the cycle and constituted by 4 to 10 —O—X units, in which X is either $—CHR_6—CHR_7—$ or $—CHR_6—CHR_8—Cr_9R_7—$ $R_6$, $R_7$, $R_8$ and $R_9$, which can be the same or different, being a hydrogen atom or an alkyl radical having 1 to 4 carbon atoms, whereby one of the X can be $—CHR_6—CHR_8—CR_9R_7—$ when the —O—X units incorporate the $—O—CHR_6—CHR_7—$ grouping.

7. Process according to any one of the claims 1 to 4, characterized in that the complexing compound is a macrocyclic or bicyclic compound of general formulas VIIIa or VIIIb:

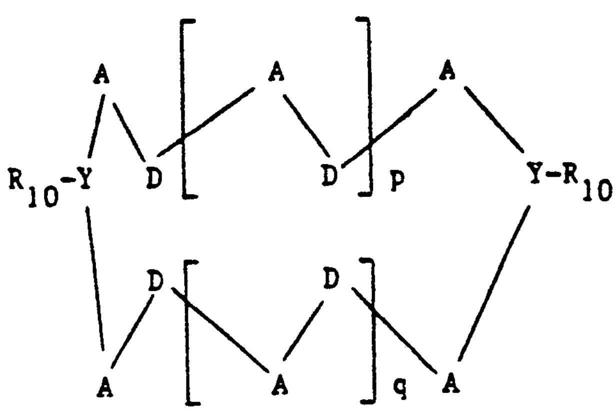

(VIIIa)

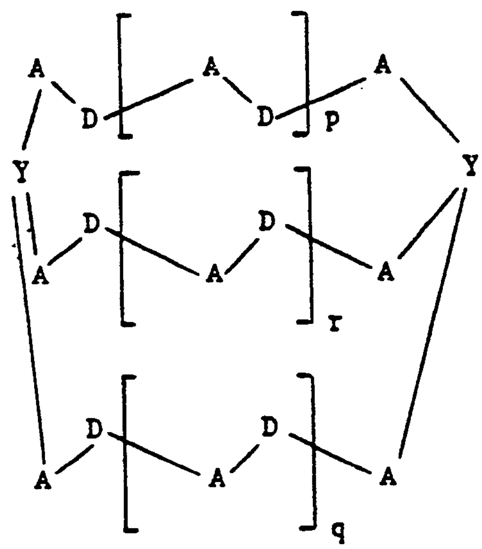

(VIIIb)

in which Y represents N or P, A represents an alkylene group with 1 to 3 carbon atoms, D represents O, S or $N—R_{11}$, in which $R_{11}$ represents an alkyl radical with 1 to 6 carbon atoms, $R_{10}$ represents an alkyl radical with 1 to 6 carbon atoms and p, q and r, which can be the same or different, are integers between 1 and 5.

8. Process according to any one of the preceding claims, characterized in that the complexing compound is grafted to a crosslinked organic support.

9. Process according to any one of the preceding claims, characterized in that working takes place at a temperature between 20 and 200°C.